(19) Europäisches Patentamt
European Patent Office
Office européen des brevets

(11) **EP 3 082 448 B1**

(12) **EUROPEAN PATENT SPECIFICATION**

(45) Date of publication and mention
of the grant of the patent:
**14.08.2019 Bulletin 2019/33**

(21) Application number: **14820799.6**

(22) Date of filing: **12.12.2014**

(51) Int Cl.:
*A23K 20/174* *(2016.01)*          *A23K 40/30* *(2016.01)*
*A23K 50/40* *(2016.01)*          *A23K 50/42* *(2016.01)*

(86) International application number:
**PCT/EP2014/077593**

(87) International publication number:
**WO 2015/091276 (25.06.2015 Gazette 2015/25)**

(54) **USE OF PALATABILITY ENHANCERS FOR PET FOOD**

VERWENDUNG VON SCHMACKHAFTIGKEITSVERSTÄRKER FÜR TIERNAHRUNG

UTILISATION D'EXHAUSTEURS DE GOÛT POUR ALIMENTS POUR ANIMAUX DE COMPAGNIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2013 EP 13306762**

(43) Date of publication of application:
**26.10.2016 Bulletin 2016/43**

(73) Proprietor: **Spécialités Pet Food
56250 Elven (FR)**

(72) Inventor: **CALLEJON, Laurence
F-56800 Ploermel (FR)**

(74) Representative: **Regimbeau
20, rue de Chazelles
75847 Paris Cedex 17 (FR)**

(56) References cited:
**EP-A1- 1 504 674          EP-A2- 0 695 507
WO-A2-2007/109761          WO-A2-2007/126990
US-A1- 2006 257 455          US-A1- 2009 235 872
US-A1- 2012 129 785          US-B1- 8 367 130**

Remarks:
The file contains technical information submitted after the application was filed and not included in this specification

**Description**

The present invention relates to the field of pet food.

More precisely, the present invention provides palatability-enhancing compositions comprising at least one vitamin selected from the group consisting of vitamin D3, vitamin B1, and combinations thereof, for use in pet food, as well as methods of preparation and uses thereof.

## BACKGROUND TO THE INVENTION

Pets, in particular cats and dogs, are well taken care of by their owners which provide them a proper selection of foods. Those foods include not only pets' usual nutritionally-balanced diet, but also supplements and treats. Pets, like humans, are attracted to and eat more regularly and easily foods which they find palatable. Therefore, palatability enhancers are extremely important for animal consumption. Animal foods such as pet foods typically contain palatability enhancers to increase the palatability thereof, and to make them appealing to pets. A large number of palatability enhancers have been described so far.

However, food palatability differs not only from one type of food to another, but also from one animal species to another.

For example, a palatability enhancer effective in dry pet foods is usually not effective when used in semi-moist or wet pet foods.

Moreover, a palatability enhancer effective with cats is often not effective with dogs.

WO 2007/109761 discloses a dog food palatability-enhancing composition comprising at least one aroma chemical selected from 2-methylfuran, 2-methylpyrrole, 2-methylthiophene and dimethyl disulfide. This composition can also comprise a sulfur-containing compound such as vitamin B1.

US 8,367,130 discloses a consumable-type pet treat comprising vitamin B1.

EP 0 695 507 discloses a dog food taste enhancer dressing composition, which can comprise vitamins B1 and D3.

US 2006/257455 discloses a hypoallergenic animal food composition comprising vitamin B1 as a sulfur-containing compound.

EP 1 504 674 discloses a fermented milk product comprising vitamin D3 for the stimulation of calcium and phosphorus absorption.

US 2012/129785 discloses a nutrition system for a companion animal comprising vitamins B1 and D3.

The above cited documents all disclose pet food compositions which include vitamins B1 and/or D3 for various purposes mostly related to health benefits. However, none of these documents has specifically focused on the herein newly discovered palatability-enhancing effect of vitamin B1 or D3.

There is therefore a continuing need for new palatability enhancers, which provide a robust flavor and which are easily and effectively usable for companion animals including pets such as cats and dogs, in types of foods so different as dry, intermediate and wet foods.

## SUMMARY OF THE INVENTION

The present invention provides the use of a compound selected from the group consisting of vitamin D3, vitamine B1, and combinations thereof, for enhancing the palatability of a dry dog food.

The present disclosure describes a pet food palatability-enhancing composition.

The present disclosure describes a method for enhancing the palatability of a pet food.

The present disclosure describes a method for boosting the palatability-enhancing effect of a pet food palatability-enhancer.

The present disclosure describes a kit for enhancing the palatability of a pet food.

## DETAILED DESCRIPTION OF THE INVENTION

DEFINITIONS

Unless specifically stated otherwise, percentages are expressed herein by weight of a product reference. In the present disclosure, ranges are stated in shorthand, so as to avoid having to set out at length and describe each and every value within the range. Any appropriate value within the range can be selected, where appropriate, as the upper value, lower value, or the terminus of the range. For example, a range of 0.1-1.0 represents the terminal values of 0.1 and 1.0, as well as the intermediate values of 0.2, 0.3, 0.4, 0.5, 0.6, 0.7, 0.8, 0.9, and all intermediate ranges encompassed within 0.1-1.0, such as 0.2-0.5, 0.2-0.8, 0.7-1.0, etc.

As used throughout, the singular form of a word includes the plural, and vice versa, unless the context clearly dictates otherwise. Thus, the references "a", "an", and "the" are generally inclusive of the plurals of the respective terms. For example, reference to "a method" or "a food" includes a plurality of such "methods" or "foods". Similarly, the words "comprise", "comprises", and "comprising" are to be interpreted inclusively. Likewise the terms "include", "including" and "or" should all be construed to be inclusive. All these terms however have to be considered as encompassing exclusive embodiments that may also be referred to using words such as "consist of".

The methods and compositions and other embodiments exemplified here are not limited to the particular methodologies, protocols, and reagents that are described herein because, as the skilled artisan will appreciate, they may vary.

Unless defined otherwise, all technical and scientific terms, terms of art, and acronyms used herein have the meanings commonly understood by the skilled artisan in the field(s) of the invention, or in the field(s) where the term is used. Although any compositions, methods, articles of manufacture, or other means or materials similar or equivalent to those described herein can be used in the practice of the present invention, the preferred compositions, methods, articles of manufacture, or other means or materials are described herein.

The term "about" as used herein when referring to a measurable value such as an amount, a temporal duration, and the like, is meant to encompass variations of ±20%, more preferably ±10%, even more preferably ±5% from the specified value, as such variations are appropriate to reproduce the disclosed methods and products.

The terms "pet" and "companion animal" are synonymous and mean any domesticated animal including, without limitation, cats, dogs, rabbits, guinea pigs, ferrets, hamsters, mice, gerbils, birds, horses, cows, goats, sheep, donkeys, pigs, and the like.

In the context of the present invention, pets such as dogs and cats are preferred.

By "vitamin", it is meant an organic chemical compound (or related set of compounds) which cannot be synthesized in sufficient quantities by a living organism, and must be obtained from the diet. Vitamins have diverse chemical structures but they are small molecules compared to macromolecules such as proteins, carbohydrates. Vitamins are classified as either water-soluble or fat-soluble. Water-soluble vitamins dissolve easily in water, and this group includes Vitamin B1 (or Thiamin), Vitamin B2 (or Riboflavin), Vitamin B3 (or Niacin or PP with 2 equivalent forms : Nicotinic acid or Nicotinamide), Vitamin B5 (or Pantothenic acid), Vitamin B6 (or Pyridoxin), Vitamin B8 (or Vitamin H or Biotin), Vitamin B9 (or Folic acid), Vitamin B12 (or Cobalamin), Vitamin C (L-ascorbic acid). Fat-soluble vitamins are absorbed through the intestinal tract with the help of lipids (fats), and this group includes Vitamin A (also called Retinol), Vitamin D (or Calciferol with 2 existing forms : Vitamin D2 or Ergocalciferol - of vegetal origin- and Vitamin D3 or Cholecalciferol -of animal origin-), Vitamin E (or Tocopherols) and Vitamin K (with 2 exiting forms : Vitamin K1 or Phylloquinone -of vegetal origin-and Vitamins K2 or Menaquinones -of animal or bacterial origin-).

Are also encompassed by the term "vitamin", any vitamin derivative, any vitamin isomer, and any vitamin salt, as well as any edible source of vitamins.

By "vitamin derivatives", it is meant any metabolite and/or any degradation product that can be obtained from a given vitamin, any vitamin ester, as well as any molecule structurally linked with a given vitamin (such as encapsulated vitamins).

By "vitamin isomers", it is meant any compound having the same numbers and types of atoms but different molecular arrangements as a given vitamin.

By "vitamin salts", it is meant any combination of a given vitamin (or derivative thereof or isomer thereof) with mineral(s) to give salts.

By "edible sources of vitamins", it is meant any natural ingredient or raw material containing at least about 0.001%, preferably at least about 0.005%, more preferably at least about 0.01%, yet more preferably at least about 0.05% (by weight) of one or more vitamins.

Non-limiting examples of vitamins, vitamin derivatives, vitamin isomers, and vitamin salts include retinol, retinoic acid, isoretinoin, retinyl phosphate, thiamine, thiamine mononitrate, thiamine monophosphate, thiamine diphosphate, thiamine hydrochloride, riboflavin, niacin, nicotinamide, pantothenic acid, calcium pantothenate, pyridoxin, pyridoxal, pyridoxamine, pyridoxal phosphate, biotin, folic acid, dihydrofolic acid, tetrahydrofolate, folacin, cobalamine, cyanocobalamine, methylcobalamine, ascorbic acid, sodium ascorbate, calcium ascorbate, potassium ascorbate, magnesium ascorbate, zinc ascorbate, molybdenum ascorbate, chromium ascorbate, manganese ascorbate, sodium ascorbyl phosphate, cholecalciferol, ergocalciferol, calcitriol, calcifediol, alpha-tocopherol, beta-tocopherol, gamma-tocopherol, delta-tocopherol, alpha-tocotrienol, beta-tocotrienol, gamma-tocotrienol, delta-tocotrienol, tocopherol acetate, tocopherol palmitate, phylloquinone, manaquinone, menadione, and the like. Of note, classification of vitamins and derivatives and isomers and salts thereof typically depends on the technical literature sources. Thus, a same compound can be classified, from one literature source to another, as a "vitamin" or a "vitamin isomer" or a "vitamin derivative" or a "vitamin salt".

By the terms "appropriate food carrier for at least one vitamin" (also referred to herein as "appropriate carrier", "appropriate food carrier", "food carrier", "carrier"), it is meant herein a usually inactive substance (i.e., an inactive molecule or an inactive mix of molecules) that is used in association with a vitamin or mix of vitamins. Typically, a carrier aids the application of said vitamin or mix of vitamins. Appropriate food carriers may be solid or fluid. Examples of appropriate food carriers are, *inter alia,* water, carbohydrates (e.g., maltodextrin, cyclodextrin), microbial proteins (e.g., yeasts), vegetable/plant proteins (e.g., soya flour, soya protein concentrates, soya protein isolates), animal proteins, fat, as well as mineral or organic compounds, and the like.

The term "palatability" means a relative preference of an animal for one food product to another. Palatability refers to the overall willingness of an animal to eat a certain food product. Advantageously but not necessarily, palatability further refers to the capacity of the eaten food product to satisfy the animal. Whenever an animal shows a preference, for example, for one of two or more food products, the preferred food product is more "palatable" and has "enhanced palatability". The relative palatability of one food product compared to one or more other food products can be determined, for example, in side-by-side, free-choice comparisons, e.g., by relative consumption of the food products, or other appropriate measures of preference indicative of palatability. It can advantageously be determined by a standard testing protocol in which the animal has equal access to both food products such as a test called "two-bowl test" or "versus test" (see below). An alternative can be the "one bowl test" or "monadic test" in which only one bowl of food is offered to the animal. With this methodology, some criteria linked to palatability are recorded such as intake of food, percentage of animals having totally consumed the food, percentage of animals having refused the food (food not at all eaten), rate of consumption. Such preference can arise from any of the animal's senses, but typically is related to, inter alia, taste, aftertaste, smell, mouth feel and/or texture.

A pet food product stated herein to have "enhanced palatability" is one for which a pet exhibits preference relative to a control food product. Advantageously, a pet food product has two major advantages: it has enhanced palatability to pets and it is appealing to pet owners.

The terms "palatability enhancers" (PEs), "palatants", "palatability agents", "appetizing factors", "appetizing agents", "palatability-enhancing compositions (PECs)", and any other similar terms mean any material that enhances palatability of a food product to an animal. A PE may be a single material or a blend of materials, and it may be natural, processed or unprocessed, synthetic, or part of natural and part of synthetic materials. Typically, a PE for animal food is a liquid or dry edible composition that provides a taste, aftertaste, smell, mouth feel, texture, and/or organoleptic sensation that is pleasant to the target animal. For pets, a PE may contribute to attractiveness (also called "initial food appeal") by its smell and/or to continued consumption by its smell but also by its taste and/or its aftertaste, and/or its mouth feel, and/or its texture. "Attractiveness" is an aspect of palatability that induces an animal to initially taste or try a food product, and that can be measured by the criteria "first choice" or "first food consumed". "Continued consumption" is an aspect of palatability that induces an animal to continue consuming a food product that has been initially only tasted or tried.

Although being in principle equivalent, the terms "palatability enhancer (PE)" and "palatability-enhancing composition (PEC)" will be conveniently used in the present disclosure to distinguish two types of products as follows:

- a "PEC" designates here:

  ◦ either at least one vitamin, or
  ◦ a mix comprising said at least one vitamin such as a mix of said at least one vitamin with (i) one or more food carriers and/or (ii) one or more palatability-enhancing ingredients and/or (iii) one or more PEs, wherein said at least one vitamin is present in an appropriate amount for enhancing palatability;

- whereas, here, a "PE" does not comprise any such vitamin in such an appropriate amount for enhancing palatability. This means that said at least one vitamin may however be present in a "PE" in an appropriate amount for achieving another effect than a palatability-enhancing effect. For example, said at least one vitamin (e.g., Vitamin C, Vitamin E) may be present in a "PE" in an appropriate amount for achieving an antioxidant effect but not a palatability-enhancing effect.

The term "food" or "food product" as used herein means a product or composition that is intended for ingestion by an animal and provides at least one nutrient to the animal. The term "food" includes any food, feed, snack, food supplement, treat , meal substitute, or meal replacement. "Food" encompasses such products in any form, solids, liquids, gels, or mixtures or combinations thereof. Thus, beverages of any type are clearly encompassed within the term "food."

The term "pet food" or "pet food product" means a composition intended for consumption by a pet. For instance, a "dog food" or a "dog food product" means a composition intended for consumption by a dog. As another example, a "cat food" or a "cat food product" means a composition intended for consumption by a cat.

There are three main categories or classes of pet food products depending on their moisture content, which is either low or medium or high:

- dry or low moisture-containing products (having less than about 14% moisture): they usually produce a crunching sound when chewed by a pet; they are generally highly nutritious, may be inexpensively packaged (e.g., in bags or boxes), and are highly convenient to store and use;

- canned or wet or high moisture-containing products (having more than about 50% moisture): typically high meat-containing products ; they are usually costly to produce and package (mainly in cans);
- semi-moist or semi-dry or soft dry or soft moist or intermediate or medium moisture-containing products (having from about 14 to about 50% moisture): usually packaged in appropriate bags or boxes.

Nutritionally-balanced pet foods are widely known and used in the art.

A "nutritionally-complete", "nutritionally-balanced" or "complete and nutritionally-balanced food" is one that contains all known required nutrients for the intended recipient or consumer of the food, in appropriate amounts and proportions based, for example, on recommendations of recognized or competent authorities in the field of companion animal nutrition. Such foods are therefore capable of serving as a sole source of dietary intake to maintain life, without the addition of supplemental nutritional sources. Thus, such foods do not comprise food supplements and treats, as defined below.

A nutritionally-complete food can be, for example, in the form of kibbles, chunk-in-"X" products, and loafs, as defined below.

The term "kibble" used herein refers to particulate chunks or pieces formed by either a pelleting or extrusion process. Typically, kibbles are produced to give dry and semi-moist pet food. The pieces can vary in sizes and shapes, depending on the process or the equipment. For instance, kibbles can have spherical, cylindrical, oval, or similar shapes. They can have a largest dimension of less than about 2 cm for example.

The term "chunk-in-"X" products" mean herein all edible foodstuffs comprising chunks in a preparation (said preparation being "the X preparation"). Classical examples thereof are chunk-in-jelly products, chunk-in-gravy products, and the like. This category of "chunk-in-X" products encompasses also edible forms other than chunks that may be contained in the X preparation such as a jelly, a gravy, and the like. For instance, other forms than chunks may be sliced products, grated products, etc.

The term "loaf" used herein refers to edible foodstuffs obtained as moist products, and includes terrines, pâtés, mousses, and the like.

The term "food supplement" or "dietary supplement" or "supplement" means a product that is intended to be ingested in addition to the normal animal diet. Dietary supplements may be in any form, e.g., solid, liquid, gel, tablets, capsules, powder, and the like. Preferably they are provided in convenient dosage forms. In some embodiments, they are provided in bulk consumer packages such as bulk powders, liquids, gels, or oils. In other embodiments, supplements are provided in bulk quantities to be included in other food items such as snacks, treats, supplement bars, beverages, and the like. Palatability enhancers can be used to improve palatability of dietary supplements in the same manner as they are used to improve palatability of nutritionally-balanced foods.

The term "treat" means any food item that is designed to be fed to a pet, preferably at non-meal time, by the owner to help, promote or sustain a bonding process between a pet and its owner. Examples of treats are bones, rawhides, sticks, pillows, biscuits, and the like. Treats may be nutritional or not, entirely or partially consumable (e.g., consumable toys). Treats often contain palatability enhancers in a manner comparable to nutritionally-balanced foods.

The term "animal digest" means herein material which results from chemical and/or enzymatic hydrolysis of clean, undecomposed animal tissue. In some embodiments, an animal digest as used herein is fully consistent with the definition promulgated by the Association Of American Feed Control Officials, Inc. (AAFCO). Animal digest is preferably derived from animal tissues, including cold-blooded marine animals, excluding hair, horns, teeth, hooves, and feathers. The skilled artisan will appreciate that while such tissues are not preferred, trace amounts might be found unavoidably even under good manufacturing practices. Also not included are visceral contents or foreign or fecal matter, although trace contaminant amounts are sometimes present. An animal digest may be dried or not. Examples of animal digests are:

- digest of poultry (or pork, beef, sheep, lamb, fish, etc): material from poultry (pork, beef, etc) which results from chemical and/or enzymatic hydrolysis of clean and undecomposed tissue;
- digest of pork (or beef, sheep, lamb, fish, etc) by-products: material from pork (beef, etc.) which results from chemical and/or enzymatic hydrolysis of clean and undecomposed tissue from non-rendered clean parts from cattle (pigs, sheep, lamb, etc), other than meat, for example lungs, spleen, kidneys, brain, livers, blood, bone, partially-defatted low-temperature fatty tissue, and stomachs and intestines, freed of their contents;
- digest of poultry by-products: material which results from chemical and/or enzymatic hydrolysis of clean and undecomposed tissue from non-rendered clean parts of poultry, other than meat, such as livers, hearts, heads, feet, and viscera. As used herein, "poultry" encompasses any species or kind of bird, preferably chicken, turkey, duck, and the like; and
- digest of fish by-products: material which results from chemical and/or enzymatic hydrolysis of clean and undecomposed tissue from non-rendered clean parts from fish. As used herein, "fish" encompasses any species or kind of fish or crustaceans, preferably tuna, salmon, cod, whitefish, shrimp, sardine, and the like.

Animal digests may also be referred to as "animal products" or "animal by-products", all these terms being used herein as synonymous.

The terms "dairy products and by-products" include, without limitation, products and by-products derived from cheese, milk, whey, and the like.

The term "yeast" herein refers to any yeast, preferably inactive, as well as to yeast by-products that are compatible with compositions for animal consumption. Yeasts are well known in the art as being protein-rich. Yeasts include, without limitation, brewer's yeast, baker's yeast, torula yeast, molasses yeast, and the like. Yeast by-products include, without limitation, yeast extracts, yeast hydrolysates, cream yeasts, etc.

As used herein, a "pet food ingredient" is any compound, composition or material that is suitable for pet consumption. Non-limiting examples of pet food ingredients are palatability enhancers, animal digests, proteins, peptides, amino acids, grains, carbohydrates, fats or lipids, nutrients, anti-oxidants, preservatives, surfactants, texturing agents, colouring agents, seasonings, etc. One or more pet food ingredients form a "pet food preparation" that will be further processed so as to obtain a final pet food (e.g., a ready-to-eat or ready-to-use pet food).

As used herein, a "palatability-enhancing composition ingredient" or "palatability enhancer ingredient" is any compound, composition or material that is suitable for pet consumption. Non-limiting examples of palatability-enhancing composition ingredients are animal digests, proteins, peptides, amino acids, carbohydrates, fats or lipids, nutrients, anti-oxidants, preservatives, surfactants, texturing agents, etc. Ingredients may be comprised as such in the palatability-enhancing composition, or they can be contacted into the composition and react *in situ* for producing transformed materials that are also encompassed by the term "palatability-enhancing composition ingredient". Examples of ingredients that react together in the composition are, without limitation, fats, peptides, amino acids, and carbohydrates, so as to obtain transformed materials such as Maillard reaction products, and the like.

"Proteins" include all conventional protein sources that are compatible for animal consumption, especially plant or vegetable proteins, animal proteins (such as casein or albumin or animal digests), and microbial proteins (e.g., yeast).

Examples of vegetable proteins are corn gluten, soy protein, soy flour, hydrolyzed vegetable protein (HVP), and the like.

Examples of grains are corn, milo, alfalfa, wheat, barley, rice, soy, and the like.

Examples of carbohydrates include dextrose, fructose, sucrose, polysaccharides, fibers, starches, and the like.

Examples of fats include tallow, oils, from any origin such as animal, plant (including vegetable), or marine oils. Plant oils which are available in large quantities are typically canola oil, soybean oil, corn oil, olive oil, sunflower oil, linseed oil, palm oil, safflower oil, and the like, as well as by-products thereof. Typical animal fats are tallow, lard, poultry fat, and the like, as well as by-products thereof. Marine oils are typically tuna oil, sardine oil, salmon oil, anchovy oil, fish oil, and the like, as well as by-products thereof. Also are encompassed herein the fats that are derived from animal, plant, marine sources, or that are produced by animals and plants.

Examples of nutrients include, without limitation, minerals and electrolytes such as calcium, potassium, sodium, zinc, iron, manganese, copper, iodine, and the like.

Anti-oxidants and preservatives are, for example, tocopherols, rosemary extract, phosphoric acid, and the like.

"Surfactants" are molecules that are surface active. They typically have a hydrophilic portion (e.g., one or more head groups) and a hydrophobic (or lipophilic) portion (e.g., one or more tails). Surfactants are well-known in the art. One can cite, for example, Tween surfactants. Surfactants include, without limitation, emulsifiers and wetting agents. In some instances, the terms "surfactants" and "emulsifiers" can be used interchangeably.

A "thermal reaction" is a reaction obtained by combining at an elevated temperature, at least one reducing sugar, and at least one nitrogen compound (e.g., an amino acid). Such a reaction may actually include various concomitant and/or successive reactions, including, e.g., Maillard reaction(s). It is thus meant herein by the term "Maillard ingredient(s)" or "Maillard precursor(s)", one or more reducing sugars and/or one or more nitrogen compounds. Indeed, Maillard ingredients are ingredients used to achieve one or more thermal reactions as defined above.

"Coating", as used herein, refers to the topical deposition of the palatability enhancer onto the surface of the basal food composition, such as by spraying, dusting, and the like.

"Inclusion" as used herein, refers to the addition of the palatability enhancer internally to the pet food preparation, by mixing it with other pet food ingredients, before further processing steps for obtaining the final pet food product (including thermal treatment and/or extrusion and/or retorting, etc).

"Containers" include, but are not limited to, bags, boxes, cartons, bottles, packages of any type or design or material, over-wrap, shrink-wrap, stapled or otherwise affixed elements, or combinations thereof.

The term "single package" means that the elements of a kit are physically associated in or with one or more containers and considered a unit for manufacture, distribution, sale, or use. A single package may be containers of individual elements physically associated such that they are considered a unit for manufacture, distribution, sale, or use.

As used herein, a "means for communicating information or instructions" is a kit element under any form suitable for providing information, instructions, recommendations, and/or warranties, etc. Such a means can comprise a document, digital storage media, optical storage media, audio presentation, visual display containing information. The means of communication can be a displayed web site, brochure, product label, package insert, advertisement, visual display, etc.

DESCRIPTION OF SOME EMBODIMENTS OF THE INVENTION

The present invention is defined in appended claims 1 to 3.

The present disclosure concerns a pet food palatability-enhancing composition (PEC) comprising at least one vitamin selected from the group consisting of vitamin D3, vitamin B1, and combinations thereof.

Said vitamin can be selected from vitamin D3, vitamin B1, derivatives thereof, isomers thereof, salts thereof, edible sources thereof, and combinations thereof.

Preferably, in the present disclosure, said PEC further comprises at least one appropriate food carrier for said vitamin and/or at least one palatability-enhancing composition ingredient (such as fat and/or one or more Maillard ingredients) and/or at least one palatability enhancer (PE; such as one or more animal digests). For clarity purposes, said at least one appropriate food carrier for said vitamin and/or said at least one palatability-enhancing composition ingredient and/or said at least one PE will be referred to herein as "component(s)".

In particular, in said PEC, said palatability-enhancing composition ingredient and/or said PE is combined with said vitamin, and optionally with said food carrier.

Typically, said at least one vitamin is present in an appropriate amount for achieving the expected palatability-enhancing effect of interest when finally used in a pet food.

For example, said PEC comprises at least 0.01%, particularly at least 0.05%, more particularly at least 0.1%, at least 0.15%, at least 0.20%, at least 0.25%, at least 0.3%, at least 0.5%, at least 1%, at least 1.5%, at least 2%, at least 3%, at least 4%, at least 5%, at least 7.5%, at least 10%, at least 15%, at least 20%, at least 25%, at east 30%, at least 35%, at least 40%, at least 45%, at least 50%, at lest 55%, at least 60%, at least 65%, at least 70%, at least 75%, at least 80%, at least 85%, at least 90%, at least 95%, at least 99%, at least 99.95%, at least 99.99% and even more particularly 100% by weight of said vitamin, based on the total weight of said PEC.

In particular, said PEC comprises from 0.01 to 100 %, particularly from 0.05 to 99.99%, more particularly from 0.10 to 99.95% by weight of said vitamin, based on the total weight of said PEC.

The present diclosure further relates to a method for enhancing the palatability of a pet food, comprising:

a) providing a PEC as described above that comprises at least one vitamin selected from the group consisting of vitamin D3, vitamin B1, and combinations thereof;
b) optionally, heat-treating said PEC;
c) adding said optionally heat-treated PEC to a pet food preparation; and
d) obtaining a pet food having enhanced palatability, particularly in comparison with said pet food which does not comprise said PEC.

Preferably, in the present disclosure, said step a) comprises at least the following sub-steps:

a1) providing at least one vitamin selected from the group consisting of vitamin D3, vitamin B1, and combinations thereof;
a2) providing at least one component (such as at least one appropriate food carrier and/or at least one palatability-enhancing composition ingredient and/or at least one PE);
a3) combining said at least one vitamin of step a1) with said at least one component of step a2).

For example, said pet food comprises at least 0.0005 %, at least 0.00075 %, at least 0.001 %, at least 0.0025%, at least 0.005%, at least 0.0075%, at least 0.01%, at least 0.025%, at least 0.05%, at least 0.075%, at least 0.1%, at least 0.25%, at least 0.5%, at least 0.75%, at least 1%, at least 1.25%, at least 1.5%, at least 1.75%, at least 2%, at least 3%, at least 4%, at least 5% by weight of said PEC, based on the total weight of said pet food.

In particular, said pet food comprises from 0.0005 to 5%, particularly from 0.001 to 3%, particularly from 0.0025 to 2%, more particularly from 0.005 to 1.5%, and even more particularly from 0.0075 to 1.25% by weight of said PEC, based on the total weight of said palatable pet food.

Combining a3) can be a one-step mixing or a multiple-step mixing. For instance, in a one-step mixing, said at least one PE and/or at least one palatability-enhancing composition ingredient and/or at least one appropriate food carrier is(are) simultaneously mixed with said at least one vitamin. Alternatively, in a two-step mixing, said at least one PE and/or at least one palatability-enhancing composition ingredient can be mixed with a pre-existing mixture comprising said at least one vitamin and said at least one appropriate food carrier. Yet alternatively, combining a3) can be a three-step mixing if each of said at least one PE and/or at least one palatability-enhancing composition ingredient and/or at least one appropriate food carrier, and said at least one vitamin are mixed sequentially.

The optional step b) of heat treatment is performed to achieve, e.g., thermal reaction(s) and/or drying. When indicating herein "step b)" or "a step b)" or "the step b)", it is meant one or more steps b). Thus, more than one step b) can be advantageously performed: for example, one or more steps b) to achieve thermal reaction(s), and one or more steps b) for drying the resulting composition. The number and the sequence of these steps b) will be easily determined by the skilled artisan based on his expertise and in light of the general knowledge in the field of the invention.

Drying is routine for the skilled artisan. Typically, drying is performed so as to remove any excess water. In particular, the resulting water content is less than or equal to about 15%, typically about 10%, yet typically from about 1 to about 8%, by weight of the thus obtained dry product.

The present disclosure further relates to a method for boosting the palatability-enhancing effect of a pet food PE, comprising:

a) combining said PE with at least one first PEC (hereinafter referred to as "PECa") that comprises at least one vitamin selected from the group consisting of vitamin D3, vitamin B1, and combinations thereof; and
b) obtaining a second PEC (hereinafter referred to as "PECb") wherein the palatability-enhancing effect of said PE is boosted, in particular in comparison with said PE which is not combined with said at least one PECa.

Said PECa in step a) can be obtained by a method comprising at least the following sub-steps:

i) providing at least one vitamin selected from the group consisting of vitamin D3, vitamin B1, and combinations thereof;
ii) providing at least one component (such as at least one appropriate food carrier and/or at least one palatability-enhancing composition ingredient and/or at least one PE different from the PE in step a) above);
iii) combining said at least one vitamin of step i) with said at least one component of step ii), thereby obtaining said PECa.

Preferably, in the present disclosure, said at least one vitamin is present in an appropriate amount for achieving the expected palatability-enhancing effect of interest when finally used in a pet food.

For example, said PECa obtained in step a) comprises at least 0.01%, particularly at least 0.05%, more particularly at least 0.1%, at least 0.15%, at least 0.20%, at least 0.25%, at least 0.3%, at least 0.5%, at least 1%, at least 1.5%, at least 2%, at least 3%, at least 4%, at least 5%, at least 7.5%, at least 10%, at least 15%, at least 20%, at least 25%, at east 30%, at least 35%, at least 40%, at least 45%, at least 50%, at lest 55%, at least 60%, at least 65%, at least 70%, at least 75%, at least 80%, at least 85%, at least 90%, at least 95%, at least 99.9%, at least 99.95%, at least 99.99% and even more particularly 100%, by weight of said vitamin, based on the total weight of said PECa.

In particular, said PECa obtained in step a) comprises from 0.01 to 100 %, particularly, from 0.05 to 99.99%, more particularly from 0.10 to 99.95% by weight of said vitamin, based on the total weight of said PECa.

For example, said PECb obtained in step b) comprises at least 0.01%, particularly at least 0.05%, more particularly at least 0.1%, at least 0.15%, at least 0.20%, at least 0.25%, at least 0.3%, at least 0.5%, at least 1%, at least 1.5%, at least 2%, at least 3%, at least 4%, at least 5%, at least 7.5%, at least 10%, at least 15%, at least 20%, at least 25%, at east 30%, at least 35%, at least 40%, at least 45%, at least 50%, at lest 55%, at least 60%, at least 65%, at least 70%, at least 75%, at least 80%, at least 85%, at least 90%, at least 95%, at least 99.9%, at least 99.95%, and even more particularly at least 99.99%, by weight of said PECa, based on the total weight of said PECb.

In particular, said PECb obtained in step b) comprises from 0.01 to 99.99%, particularly, from 0.05 to 99.95%, more particularly from 0.10 to 99.90% by weight of said PECa, based on the total weight of said PECb.

In one embodiment of the present disclosure, said PECb combining said PE with said PECa comprising said vitamin is then added to a pet food preparation. In another embodiment, said PE and said PECa are added, either simultaneously or sequentially, to a pet food preparation where they are combined (step a)) *in situ*.

Yet, the present disclosure is further directed to a method for the preparation of a palatable pet food, comprising:

a) providing a first PEC (hereinafter referred to as "PECa") comprising at least one vitamin selected from the group consisting of vitamin D3, vitamin B1, and combinations thereof;
b) optionally, combining said PECa with at least one component (such as at least one PE and/or at least one palatability-enhancing composition ingredient), to prepare a second PEC (hereinafter referred to as "PECb") ;
c) optionally, heat-treating the resulting PEC (PECa obtained from step a) or PECb obtained from step b));
d) adding the thus obtained (and optionally heat-treated) PEC to a pet food preparation; and
e) obtaining a palatable pet food.

Said PECa and PECb can be in a liquid or in a dry form.

Said at least one component (such as at least one PE and/or at least one palatability-enhancing composition ingredient) in step b) can be in a liquid or in a dry form.

In particular, said PECa comprises at least 0.01%, particularly at least 0.05%, more particularly at least 0.1%, at least 0.15%, at least 0.20%, at least 0.25%, at least 0.3%, at least 0.5%, at least 1%, at least 1.5%, at least 2%, at least 3%, at least 4%, at least 5%, at least 7.5%, at least 10%, at least 15%, at least 20%, at least 25%, at least 30%, at least 35%, at least 40%, at least 45%, at least 50%, at lest 55%, at least 60%, at least 65%, at least 70%, at least 75%, at least 80%, at least 85%, at least 90%, at least 95%, at least 99%, at least 99.95%, at least 99.99% and even more particularly 100% by weight of said vitamin, based on the total weight of said PECa.

In particular, said PECa comprises from 0.01 to 100 %, particularly, from 0.05 to 99.99%, more particularly from 0.10 to 99.95% by weight of said vitamin, based on the total weight of said PECa.

Typically, said PECa is present in an appropriate amount for achieving the expected palatability-enhancing effect of interest when finally used in a pet food.

In particular, said PECb comprises at least 0.01%, particularly at least 0.05%, more particularly at least 0.1%, at least 0.15%, at least 0.20%, at least 0.25%, at least 0.3%, at least 0.5%, at least 1%, at least 1.5%, at least 2%, at least 3%, at least 4%, at least 5%, at least 7.5%, at least 10%, at least 15%, at least 20%, at least 25%, at least 30%, at least 35%, at least 40%, at least 45%, at least 50%, at lest 55%, at least 60%, at least 65%, at least 70%, at least 75%, at least 80%, at least 85%, at least 90%, at least 95%, at least 99.9%, at least 99.95% and even more particularly at least 99.99% by weight of said PECa, based on the total weight of PECb.

In particular, said PECb comprises from 0.01 to 99.99 %, particularly, from 0.05 to 99.95%, more particularly from 0.1 to 99.9% by weight of said PECa, based on the total weight of PECb.

For example, said palatable pet food comprises at least 0.0005 %, at least 0.00075 %, at least 0.001 %, at least 0.0025%, at least 0.005%, at least 0.0075%, at least 0.01%, at least 0.025%, at least 0.05%, at least 0.075%, at least 0.1%, at least 0.25%, at least 0.5%, at least 0.75%, at least 1%, at least 1.25%, at least 1.5%, at least 1.75%, at least 2%, at least 3%, at least 4%, at least 5% by weight of said PECa, based on the total weight of said palatable pet food.

In particular, said palatable pet food comprises from 0.0005 to 5%, particularly from 0.001 to 3%, particularly, from 0.0025 to 2%, more particularly from 0.005 to 1.5%, and even more particularly from 0.0075 to 1.25% by weight of said PECa, based on the total weight of said palatable pet food.

Preferably, in the present disclosure, in step b), said palatability-enhancing composition ingredient is fat.

In step b), said palatability-enhancing composition ingredient can be one or more Maillard ingredients.

TypicallyIn step b), said PE can comprise at least one animal digest.

TypicallySaid PECa of step a) or PECb of step b) or PEC of step c) can further comprise at least one appropriate food carrier for said vitamin.

In particular, in step b), said PECa can be combined with said at least one PE at the beginning (e.g., mixed with other ingredients of said PE) or at the end of the manufacturing process of said PE.

Here again, the optional step c) of heat treatment is performed to achieve, e.g., thermal reaction(s) and/or drying. When indicating herein "step c)" or "a step c)" or "the step c)", it is meant one or more steps c). Thus, more than one steps c) can be advantageously performed: for example, one or more steps c) to achieve thermal reaction(s), and one or more steps c) for drying the resulting composition. The number and the sequence of these steps c) will be easily determined by the skilled artisan based on his expertise and in light of the general knowledge in the field of the invention.

Step d) can be performed by various methods well known by one skilled in the art. For example, said PECa of step a) or PECb of step b) or PEC of step c) (that can be liquid or dry) can be added to a pet food preparation by coating or by inclusion. Particularly, when PECs are added to a pet food preparation by inclusion, they can be mixed with said pet food preparation before extrusion (for dry or semi-dry pet foods) or before sterilization (for wet pet foods).

The present disclosure further concerns a method for feeding a pet, comprising feeding a pet with a pet food, wherein said pet food comprises:

- at least one vitamin selected from the group consisting of vitamin D3, vitamin B1, and combinations thereof,
- optionally, at least one appropriate food carrier for said vitamin, and
- optionally, at least one PE.

For example, said pet food comprises at least 0.0005 %, at least 0.00075 %, at least 0.001 %, at least 0.0025%, at least 0.005%, at least 0.0075%, at least 0.01%, at least 0.025%, at least 0.05%, at least 0.075%, at least 0.1%, at least 0.25%, at least 0.5%, at least 0.75%, at least 1%, at least 1.25%, at least 1.5%, at least 1.75%, at least 2%, at least 3%, at least 4%, at least 5%, by weight of said vitamin, based on the total weight of said pet food.

In particular, said pet food comprises from 0.0005 to 5%, particularly from 0.001 to 3%, particularly from 0.0025 to 2%, more particularly from 0.005 to 1.5%, and even more particularly from 0.0075 to 1.25% by weight of said vitamin, based on the total weight of said pet food.

The present disclosure further concerns a palatable pet food comprising:

- at least one vitamin selected from the group consisting of vitamin D3, vitamin B1, and combinations thereof,

- optionally, at least one appropriate food carrier for said vitamin, and
- optionally, at least one PE,

wherein, said pet food comprises at least 0.0005 %, at least 0.00075 %, at least 0.001 %, at least 0.0025%, at least 0.005%, at least 0.0075%, at least 0.01%, at least 0.025%, at least 0.05%, at least 0.075%, at least 0.1%, at least 0.25%, at least 0.5%, at least 0.75%, at least 1%, at least 1.25%, at least 1.5%, at least 1.75%, at least 2%, at least 3%, at least 4%, at least 5%, by weight of said vitamin, based on the total weight of said pet food.

The present disclosure further concerns a kit for enhancing the palatability of a pet food comprising, in one or more containers in a single package:

- at least one vitamin selected from the group consisting of vitamin D3, vitamin B1, and combinations thereof;
- optionally, at least one appropriate food carrier for said vitamin;
- optionally, at least one PE;
- optionally, at least one Maillard ingredient; and
- optionally, at least one pet food ingredient.

Yet the present disclosure further concerns a kit for enhancing the palatability of a pet food comprising, in one or more containers in a single package:

- one or more PECs as disclosed above; and
- optionally, at least one pet food ingredient.

Particular kits according to the present disclosure further comprise a means for communicating information or instructions, to help using the kits' elements.

The present invention relates to the use of at least one vitamin selected from the group consisting of vitamin D3, vitamin B1, and combinations thereof, for enhancing the palatability of a pet food.

In the context of the invention, said pet food is a dry dog food.

Preferably, said vitamin is vitamin B1

Preferably, said dry dog food comprises at least 0.0005 %, at least 0.00075 %, at least 0.001 %, at least 0.0025%, at least 0.005%, at least 0.0075%, at least 0.01%, at least 0.025%, at least 0.05%, at least 0.075%, at least 0.1%, at least 0.25%, at least 0.5%, at least 0.75%, at least 1%, at least 1.25%, at least 1.5%, at least 1.75%, at least 2%, at least 3%, at least 4%, at least 5%, by weight of said vitamin, based on the total weight of said dry dog food.

As described above the present diclosure relates to the use of at least one vitamin selected from the group consisting of vitamin D3, vitamin B1, and combinations thereof, as an element of a pet food palatability-enhancing composition.

The present disclosure further relates to the use of at least one vitamin selected from the group consisting of vitamin D3, vitamin B1, and combinations thereof, in a method for preparing a pet food palatability-enhancing composition.

In the present invention, since vitamins are ubiquitous in food, it will be advantageous to determine the concentration of the vitamin(s) of interest which is(are) present in the composition or in the food product, and then add sufficient quantities to bring the total concentration of said vitamin(s) of interest up to the required levels.

In the present invention, said at least one vitamin can be under any appropriate form, including any free forms and any protected forms such as encapsulated forms (e.g., for protecting compounds during manufacturing of pet food, especially during extrusion).

In the present disclosure, pet food PEs or PECs can be added to pet food preparations by inclusion or by coating, thereby obtaining palatable pet foods. Addition by inclusion or by coating can be performed by the skilled artisan using conventional methods forming part of the common knowledge in the petfood technical field.

In the present disclosure, said pet food can be a nutritionally complete food or a food supplement or a treat. In particular, when said pet food is a nutritionally complete food, it can be in the form of kibbles, chunk-in-"X" products, and loafs.

The present disclosure, as described above in its whole, may be adapted to be used for pets, but cats and dogs, especially dogs, are preferred.

**EXAMPLES**

In the Examples below, Examples 1 and 2 are given for illustrating aspects that are disclosed herein only, whereas Examples 3 and 4 are provided for illustrating the subject-matter of the claimed invention.

## 1- MATERIALS AND METHODS

### 1.1- Method of palatability assessment: the "two-bowl" test

Principle of the two-bowl test:

The test is based on the postulate whereby the more food consumed, the more palatable it is.

Individual versus (Two bowls) appetence tests, based on the comparison between two foods, were carried out. Tests are performed either on panel of 36 dogs or on panel of 40 cats, depending on the test's objectives.

Operating method of the test:

- Identical amounts of food product A and food product B were weighed out and placed in identical bowls. The amount present in each ration enables the daily requirements to be met.
- Distribution of the bowls:

    Dog test: the bowls were placed in an individual feed trough accessible to dogs.
    Cat test: The bowls were presented at the same time to each cat in an individual loose box and their positions were switched at each meal to avoid a choice led by handedness.

- Duration of the test:

    * Cat test for dry food: from about 15 minutes to about 20 hours (if one of the two bowls was entirely eaten before the end of the test, the two bowls were removed, and the test was stopped);
    * Dog test for dry food: from about 15 minutes to about 30 minutes (if one of the two bowls was entirely eaten before the end of the test, the two bowls were removed, and the test was stopped).

- Measured parameters:
    First food consumed ("attractiveness") and amount of each food consumed by the end of the test;
- Calculated_parameters:
    individual consumption ratio in % (CR)

$$CRA = \text{consumption of A (g) x 100/(consumption of A+B) (g)}$$

$$CRB = \text{consumption of B (g) x 100/(consumption of A+B) (g)}$$

→ Average consumption ratio (ACR) = average of all individual ratios (an equal importance is given to each animal, regardless of its size and of its corresponding consumption).

If animals have higher or lower consumption compared to predetermined values (which are function of, e.g., the animal weight and/or metabolism), they are not taken into account into statistical treatment.

Statistical analysis:

Statistical analysis was used to determine if there was a significant difference between the 2 ratios. A Student's t-test with 3 error thresholds, namely 5%, 1% and 0.1%, was performed.

A Chi-square test was used to determine if there was a significant difference between the number of pets with Food A as first food eaten and the number of pets with Food B as first food eaten.

Significance levels are noted as below:

| NS | not significant | $(p > 0.05)$ |
| * | significant | $(p \leq 0.05)$ |
| ** | highly significant | $(p \leq 0.01)$ |

(continued)

\*\*\* very highly significant (p ≤ 0.001)

*1.2- Diets*

Control and experimental diets were prepared by using nutritionally-complete foods that contained all known required nutrients for the intended consumer of the food, in appropriate amounts and proportions based, for example, on recommandations of recognized or competent authorities in the field of companion animal nutrition. Such foods are therefore capable of serving as a sole source of dietary intake to maintain life without the addition of supplemental nutritional sources.

When the ingredients to be tested were applied topically on a dry food by coating liquid and/or dry ingredients, a pet food composition was used in the form of "uncoated kibbles". That was a partially-ended food, on which, then, were coated fat and palatability enhancers.

When the ingredients to be tested were applied by inclusion, those ingredients were mixed with other ingredients before extrusion (for dry or semi dry pet foods) or before sterilization (for wet pet foods).

When the ingredients to be tested were applied in drinkable compositions, the ingredients were mixed with water or with the fluid compositions.

2- RESULTS

2.1- Products tested in the examples

The examples below report palatability assessments of different food products (or diets), coated with various palatability enhancers (PE2 and DPE10).

Each palatability enhancer that was used in the examples below incorporated a premix antioxidant in its formulation in order to guarantee the preservation. This premix antioxidant consisted of BHA, propyl gallate, and vitamin C.

2.2- Comparative example 1: Effect on dog food palatability of a conventional antioxidant amount of vitamin C added to a palatability enhancer

A nutritionally-balanced dry food composition suitable for consumption by dogs and obtained after an extrusion and drying process, was prepared, herein referred to as "XX". Control Diet N was "XX" coated with 6% of poultry fat and 2% of PE2 (PE2 = pork liver digest B + the aforementioned premix antioxidant consisting of BHA, propyl gallate, and vitamin C). Thus, the amount of vitamin C added on the kibble upon coating with PE2 represented a contribution of 0.0001% in the kibble.

Experimental diet N1 was "XX" coated with 6% of poultry fat and 2% of PE2bis which was pork liver digest B prepared without vitamin C in the premix antioxidant, this last keeping the same levels of BHA and propyl gallate than the premix antioxydant contained in PE2 (PE2bis = pork liver digest B + the premix antioxidant consisting of BHA and propyl gallate).

As shown in Table 1 below, consumption of the food was not significantly different between Control Diet N and Experimental diet N1, demonstrating that the level of vitamin C added to the kibble by the premix antioxidant contained in PE2 did not increase palatability of dog food.

Thus, in the examples below, the amount of vitamin C brought to the kibble by the premix antioxidant contained in the palatability enhancers that were used was considered to be negligible.

**Table 1**

| Food control ("A" for analysis) | Food experimental ("B" for analysis) | % Vitamin C added on kibbles A vs B | 1st choice & stat. Significance | Consumption ratio | | Statistical significance | Number of validated animals |
|---|---|---|---|---|---|---|---|
| | | | | %A | %B | | |
| Control Diet N (2% PE2 with vit C in the premix antioxidant) | Expe Diet N1 (2% PE2bis without vit C in the premix antioxidant) | 0.0001 vs 0 | A NS | 57 | 43 | NS | 36 |
| Vit C = vitamin C | | | | | | | |

2.3- Comparative example 2: Palatability-enhancing effect upon coating a dog food with a liquid PE comprising vitamin C

A nutritionally-balanced dry food composition suitable for consumption by dogs and obtained after an extrusion and drying process, was prepared, herein referred to as "XX". Control diet N was "XX" coated with 6% of poultry fat and 2% of of a liquid palatability enhancer PE2 (PE2 = pork liver digest B, see Example above).

Experimental diet N2 was "XX" coated with 6% of poultry fat and 2% of a mix (98.5% PE2 + 1.5% vitamin C). This mix was prepared by incorporating vitamin C in liquid PE2 at the end of the process of manufacturing, once the preservatives were added. Experimental diet N3 was prepared in the same way as Experimental diet N2, but the proportion of the mix differed : 99% PE2 + 1% vitamin C.

As shown in Table 2 below, consumption of the food was significantly different between Control diet N and Experimental Diet N2, and between Control diet N and Experimental Diet N3, demonstrating the higher palatability for dog of the experimental diets coated with a PE comprising vitamin C.

The palatability results clearly showed that the addition of vitamin C strongly increased palatability of PE2, boosting its performance.

**Table 2**

| Food A-control | Food B-experimental | % of vitamin C added on kibbles A vs B | 1rst choice | Consumption ratio | | Statistical Significance | Number of validated animals |
|---|---|---|---|---|---|---|---|
| | | | | %A | %B | | |
| Control Diet N (2% PE2) | Expe Diet N2 (2% mix [98.5% PE2+1.5% Vitamin C)) | 0 vs 0.030 | B *** | 21 | 79 | *** | 37 |
| Control Diet N (2% PE2) | Expe Diet N3 (2% mix [99% PE2+ 1% Vitamin C)) | 0 vs 0.020 | B *** | 25 | 75 | *** | 34 |

2.4- Example 3: Palatability-enhancing effect upon coating a dog food with a liquid PE comprising vitamin D3

A nutritionally-balanced dry food composition suitable for consumption by dogs and obtained after an extrusion and drying process, was prepared, herein referred to as "XX". Control Diet N was "XX" coated with 6% of poultry fat and 2% of a liquid palatability enhancer PE2 (PE2 = pork liver digest B, see Examples above).

A serie of experimental palatability enhancers was prepared by incorporating increasing levels of vitamin D3 in liquid PE2. This addition was done at the end of the process of manufacturing, once the preservatives were added, by mixing liquid PE2 with vitamin D3 (or Cholecalciferol) in powder (amount of vitamin D3 in the commercial powder used in this Example: 1.25%).

Experimental diets were "XX" coated with the thus obtained different palatability enhancers.

The level of vitamin D3 added to the diet was between 0.0005 to 0.001% by weight of the diet (see Table 3 below).

As shown in Table 3 below, consumption of the food was significantly different between Control diet N and Experimental Diets N4, N5, and N6, demonstrating the higher palatability for dog of the experimental diets.

The addition of vitamin D3 in PE2 significantly increased its palatability and allowed to boost its performance.

**Table 3**

| Food A-control | Food B-experimental | % of vitamin D3 added on kibbles A vs B | 1rst choice | Consumption ratio | | Statistical Significance | Number of validated animals |
|---|---|---|---|---|---|---|---|
| | | | | % A | %B | | |
| Control Diet N (2% PE2) | Expe Diet N4 (2% mix (98% PE2+ + 2% powder containing 1.25% of Vitamin D3) | 0 vs 0.0005 | B NS | 35 | 65 | * | 34 |
| Control Diet N (2% PE2) | Expe Diet N5 (2% mix (97% PE2+ 3% powder containing 1.25% of Vitamin D3) | 0 vs 0.00075 | B NS | 28 | 72 | ** | 28 |
| Control Diet N (2% PE2) | Expe Diet N6 (2% mix (96% PE2 + 4% powder containing 1.25% of Vitamin D3) | 0 vs 0.001 | B * | 29 | 71 | *** | 34 |

2.5- Example 4: Palatability-enhancing effect upon coating a dog food with a liquid PE comprising vitamin B1:

A nutritionally-balanced dry food composition suitable for consumption by dogs and obtained after an extrusion and drying process, was prepared, herein referred to as "XX".

Control Diet N was "XX" coated with 6% of poultry fat and 2% of a liquid palatability enhancer PE2 (PE2 = pork liver digest B, see Examples above).

Control Diet LP was "XX" coated with 6% of poultry fat, then 2% of liquid palatability enhancer PE2 and finally with 1.5% of a dry palatability enhancer DPE 10.

Dry palatability enhancer DPE 10 was obtained by drying a liquid PE 10 (= pork liver digest C, different from PE 2).

A serie of 2 experimental palatability enhancers was prepared by incorporating 2 levels of vitamin B1 (in the form of Thiamin HCl) in liquid PE2. This addition was done at the end of the process of manufacturing, once the preservatives were added, by mixing liquid PE2 with vitamin B1 in powder (amount of Thiamin HCl in the commercial powder used in this Example: 98.50% minimum).

Another serie of 2 experimental palatability enhancers was prepared by incorporing 2 levels of vitamin B1 (in the form of Thiamin HCl) in dry palatability enhancer DPE 10. This addition was done at the end of the process of manufacturing, once the preservatives were added, by mixing dry DPE 10 with vitamin B1 in powder (amount of Thiamin HCl in the commercial powder used in this Example: 98.50% minimum).

Experimental diets were "XX" coated with the thus obtained different palatability enhancers.

The level of Thiamin HCl added to the diet was between 0.006 to 0.045% by weight of the diet (see Table 4 below).

As shown in Table 4 below, consumption of the food was significantly different between Control diet N and Experimental Diets N7 and N8, and between Control diet LP and Experimental diets M1 and M2, demonstrating the higher palatability for dog of the experimental diets.

The addition of vitamin B1 in liquid PE2 or in dry DPE10 significantly increased their palatabilities and allowed to boost their performances.

This result further demonstrated that the palatability-enhancing effect of vitamin B1 was obtained with different PEs (liquid PE such as PE2 and dry PE such as DPE 10).

**Table 4**

| Food A-control | Food B-experimental | % of vitamin B1 (Thiamin HCl) added on kibbles A vs B | 1rst choice | Consumption ratio | | Statistical Significance | Number of validated animals |
|---|---|---|---|---|---|---|---|
| | | | | % A | %B | | |
| Control Diet N (2% PE2) | Expe Diet N7 [2% mix (99.7% PE2+ 0.3% Thiamin HCl)] | 0 vs 0.006 | B*** | 33 | 67 | * | 33 |
| Control Diet N (2% PE2) | Expe Diet N8 [2% mix (99.9% PE2+ 0.1% Thiamin HCl)] | 0 vs 0.002 | B* | 34 | 66 | ** | 31 |
| Control Diet LP (2% PE2+ 1.5% DPE10) | Expe Diet M1 [2% PE2 + 1.5% mix (98% DPE10+ 2% Thiamin HCl)] | 0 vs 0.03 | B NS | 29 | 71 | *** | 31 |
| Control Diet LP (2% PE2+ 1.5% DPE10) | Expe Diet M2 [2% PE2 + 1.5% mix (97% DPE10+ 3% Thiamin HCl)] | 0 vs 0.045 | *** B | 35 | 65 | * | 32 |

## Claims

1. The use of a compound selected from the group consisting of vitamin D3, vitamin B1, and combinations thereof, for enhancing the palatability of a dry dog food.

2. The use according to claim 1, wherein said vitamin is vitamin B1.

3. The use according to claim 1 or 2, wherein said dry dog food comprises at least 0.0005 %, preferably at least 0.00075 %, preferably at least 0.001 %, preferably at least 0.0025%, preferably at least 0.005%, preferably at least 0.0075%, preferably at least 0.01%, preferably at least 0.025%, preferably at least 0.05%, preferably at least 0.075%, preferably at least 0.1%, preferably at least 0.25%, preferably at least 0.5%, preferably at least 0.75%, preferably at least 1%, preferably at least 1.25%, preferably at least 1.5%, preferably at least 1.75%, preferably at least 2%, preferably at least 3%, preferably at least 4%, preferably at least 5%, by weight of said vitamin, based on the total weight of said dry dog food.

## Patentansprüche

1. Verwendung eines Gemisches, ausgewählt aus der Gruppe bestehend aus Vitamin D3, Vitamin B1 und Kombinationen davon, zur Verbesserung der Schmackhaftigkeit eines Hundetrockenfutters.

2. Verwendung nach Anspruch 1, wobei das Vitamin das Vitamin B1 ist.

3. Verwendung nach Anspruch 1 oder 2, wobei das Hundetrockenfutter mindestens 0,0005 %, vorzugsweise mindestens 0,00075 %, vorzugsweise mindestens 0,001 %, vorzugsweise mindestens 0,0025 %, vorzugsweise mindestens 0,005 %, vorzugsweise mindestens 0,0075 %, vorzugsweise mindestens 0,01 %, vorzugsweise mindestens 0,025 %, vorzugsweise mindestens 0,05 %, vorzugsweise mindestens 0,075 %, vorzugsweise mindestens 0,1 %, vorzugsweise mindestens 0,25 %, vorzugsweise mindestens 0,5 %, vorzugsweise mindestens 0,75 %, vorzugsweise mindestens 1 %, vorzugsweise mindestens 1,25 %, vorzugsweise mindestens 1,5 %, vorzugsweise mindestens 1,75 %, vorzugsweise mindestens 2 %, vorzugsweise mindestens 3 %, vorzugsweise mindestens 4 %, vorzugsweise mindestens 5 % Gewichtsanteil des Vitamins umfasst, bezogen auf das Gesamtgewicht des Hundetrockenfutters.

**Revendications**

1. Utilisation d'un composé choisi dans le groupe constitué par la vitamine D3, la vitamine B1 et leurs combinaisons, pour améliorer l'appétence d'un aliment sec pour chiens.

2. Utilisation selon la revendication 1, dans laquelle ladite vitamine est la vitamine B1.

3. Utilisation selon la revendication 1 ou 2, dans laquelle ledit aliment sec pour chiens comprend au moins 0,0005 %, de préférence au moins 0,00075 %, de préférence au moins 0,001 %, de préférence au moins 0,0025 %, de préférence au moins 0,005 %, de préférence au moins 0,0075 %, de préférence au moins 0,01 %, de préférence au moins 0,025 %, de préférence au moins 0,05 %, de préférence au moins 0,075 %, de préférence au moins 0,1 %, de préférence au moins 0,25 %, de préférence au moins 0,5 %, de préférence au moins 0,75 %, de préférence au moins 1 %, de préférence au moins 1,25 %, de préférence au moins 1,5 %, de préférence au moins 1,75 %, de préférence au moins 2 %, de préférence au moins 3 %, de préférence au moins 4 %, de préférence au moins 5 % en poids de ladite vitamine, par rapport au poids total dudit aliment sec pour chiens.

**EP 3 082 448 B1**

**REFERENCES CITED IN THE DESCRIPTION**

**Patent documents cited in the description**

- WO 2007109761 A
- US 8367130 B
- EP 0695507 A
- US 2006257455 A
- EP 1504674 A
- US 2012129785 A